# EUROPEAN PATENT SPECIFICATION

(11) **EP 0 456 489 B1**
(45) Date of publication and mention of the grant of the patent: **28.07.1999**
(21) Application number: 91304175.2
(22) Date of filing: 09.05.1991
(51) Int. Cl.: H04N 7/00, H04N 7/24

(54) **Image high-frequency component multiplex transmission apparatus and receiving apparatus**
Multiplexübertragungseinrichtung von Hochfrequenz-Bildkomponenten und Empfangsgerät
Dispositif de transmission d'un multiplex de composante de haute fréquence d'image et dispositif de réception

(30) Priority: 11.05.1990 JP 12241090
(43) Date of publication of application: 13.11.1991
(73) Proprietor: VICTOR COMPANY OF JAPAN, LTD., Yokohama-Shi, Kanagawa-Ken (JP)
(72) Inventor: Sugiyama, Kenji, Noda-Shi, Chiba-Ken (JP)
(74) Representative: Crawford, Andrew Birkby

(56) References cited:
- US-A- 4 961 112
- BETTER VIDEO IMAGES 23RD ANNUAL SMPTE TELEVISION CONFERENCE SAN FRANCISCO (US) 3-4 FEBRUARY 1989 pages 296 - 311 BRETL ET AL. 'SPECTRUM COMPATIBLE HIGH-DEFINITION TELEVISION TRANSMISSION SYSTEM'
- ITEG INSTITUTE OF TELEVISION ENGINEERS OF JAPAN TECHNICAL REPORTS BSC89-10 vol. 13, no. 41, September 1989, pages 55 - 60 ITO ET AL. 'STUDY AND EXPERIMENTS OF NTSC COMPATIBLE WIDE ASPECT EDTV BROADCASTING SYSTEM'

## Description

### BACKGROUND OF THE INVENTION

The present invention relates to an image high-frequency component multiplex transmission apparatus and receiving apparatus that separates the high-frequency component that has a frequency higher than the original transmission spatial frequency which does not need multiplex transmission and multiplexes it to the fundamental frequency component included in a NTSC signal, etc. and transmits and records it.

A core broadcasting service of the first generation EDTV type commenced in Japan in October 1989. This system is known as "clearvision" and is a composite of fundamental image quality improvement technology and ghost reduction technologies, and was developed in order to have an image quality that was an improvement of the current broadcasting technology.

On the other hand, investigations are currently underway for the second generation EDTV system that maintains compatibility with current broadcast and when seen on a special receiver, realizes a higher image quality and a wide aspect ratio.

For example, in order to improve the degree of resolution, the high-frequency component that has a frequency higher than the original transmission spatial frequency (of a horizontal 4.2MHz and a vertical 480TV lines for the NTSC method), is multiplexed to the fundamental frequency and transmitted.

With respect to a transmission line of the high-frequency component, investigations are being carried out for the spatial-temporal holes (known as Fukinuki holes) and the like.

However, a method to extend the horizontal dimension of the screen is also being investigated, and one example of this is the method where the upper and lower portions of a wide screen are masked. This method is called the top and bottom masking method or the letter box method.

There has been proposed a system whereby, when a wide screen is made in this manner, the upper and lower portions of the screen become gray and the degree of resolution drops and so the high-frequency component is separated and transmitted in the top and bottom masked portions.

In "ITEJ (the Institute of Television Engineers of Japan Technical Reports," Vol.13, No.41, pp55 - 60, BCS89-10 (Sep., 1989) Ito et al. "Study and Experiments of NTSC Compatible Wide Aspect EDTV Broadcasting System" is disclosed such a system for masking approximately 25% of the upper and lower portions of the screen and broadcasting, and so the detailed description of this will be omitted here.

In any multiplexing method, the multiplex transmission line is limited by the bandwidth and so the frequency components that can be transmitted are not always sufficient.

In particular, with the top and bottom mask method, the fundamental resolution drops and so it is necessary to compensate for this by multiplexing more high-frequency components and when there is a restriction on the bandwidth of the multiplex transmission line, there is the disadvantage that the resolution cannot be improved.

US-A-4961112 published on 2 October 1990 and corresponding to JP-A-2113688 published on 25 April 1990, discloses transmission and receiving apparatus for a television signal. In this arrangement high-frequency image signals are converted to fall within the normal transmission band width and then multiplex with the basic image signal in a predetermined fashion for broadcast. The receiving apparatus includes means for reconverting and adding the high-frequency signals.

The present invention provides a multiplex apparatus which multiplexes a signal derived from extended horizontal and vertical high-frequency components with a basic video signal, the extended horizontal and vertical high-frequency components having spatial frequencies higher than those of the basic video signal, the basic video signal and the extended horizontal and vertical high-frequency components having been derived from a video signal corresponding to an image, said multiplex apparatus comprising:
band conversion means for converting the spatial frequency bands of the extended horizontal and vertical high-frequency components to that of the basic video signal, respectively;
band width change means for changing the spatial frequency band widths of the extended horizontal and vertical high-frequency components with their spatial frequency bands converted, respectively;
addition means for adding the extended horizontal and vertical high-frequency components with their spatial frequency band widths changed; and
multiplex means for multiplexing the result of the addition with the basic video signal;
characterised by further comprising:
control means for generating a control signal corresponding to the image;
and in that the control signal controls the band width change means such that the spatial frequency band widths of the extended horizontal and vertical high-frequency components with their spatial frequency bands converted are changed such that each becomes the complement of the other whereby these two components do not overlap each other on being added together.

The present invention further provides a receiving apparatus for receiving an input video signal generated by the multiplex apparatus as described above the apparatus comprising:
signal separation means for separating the input video signal into the basic video signal and the extended high-frequency components having their spatial frequency bands changed and converted into that of the basic video signal;
band width change means for changing the spatial frequency band widths of the extended high-frequency components separated from the input video signal, whereby to separate the horizontal and vertical high-frequency components respectively;
band conversion means for re-converting the spatial frequency bands, converted into that of the basic video signal, of the extended horizontal and vertical high-frequency components, with their spatial frequency band width changed, to their original spatial frequency bands, respectively; and
addition means for adding to the basic video signal the extended horizontal and vertical high-frequency components having the spatial frequency band re-converted;
the receiving apparatus being characterised by further comprising control means for generating a control signal corresponding to the image; and
in that the control signal controls the band width change means such that the band width of the extended high-frequency components is changed so as to produce the extended horizontal high-frequency component and the extended vertical high-frequency component at their original spatial band width, respectively.

The other objects and features of this invention will become understood from the following description with references to the accompanying drawings.

### BRIEF DESCRIPTION OF THE DRAWINGS

FIG. 1 is a view describing the screen of a top and bottom mask in an embodiment;
FIG. 2 is a view describing the principle of the image high-frequency component multiplex transmission apparatus and receiving apparatus of the present invention;
FIG. 3 is a view of adaptive processing for the band;
FIG. 4 is a block view of an embodiment of the image high-frequency component multiplex transmission apparatus of the present invention; and
FIG. 5 is a block view of an embodiment of the image high-frequency component multiplex receiving apparatus of the present invention.

### DETAILED DESCRIPTION OF THE PREFERRED EMBODIMENTS

The present invention will now be described in detail with reference to the accompanying drawings.

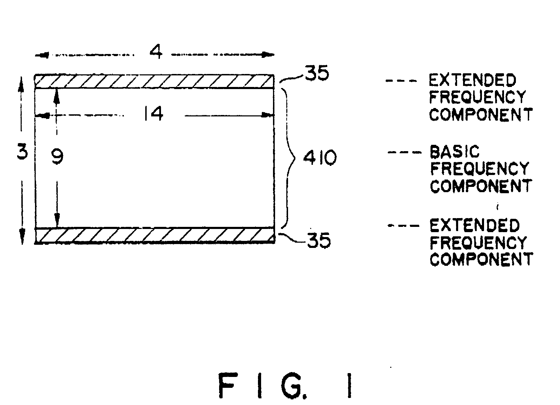

In FIG. 1, the transmission signals, for example, are signals of the NTSC method that is used for television broadcasting in Japan and the United States.

Of the 525 scan lines that are used in the NTSC system, it will be assumed that approximately 480 of these are effectively used in an actual image.

In FIG. 1, the normal NTSC system uses a screen aspect ratio (ratio of vertical to horizontal) of 3:4.

Here, 35 lines at the top and the bottom are masked in order to have multiplex transmission of the extended high-frequency components, and the approximately 410 lines remaining are used for the transmission of the basic image.

Multiplex transmission by the top and bottom mask portions is by only the high-frequency components of the Y (luminance) signals and that of the C (color) signals is by only the basic region.

In this embodiment, a current receiver takes a large screen area and so the region that is masked is held down to approximately 14%.

As a result, the aspect ratio of wide screens is normally 16:9 but in this embodiment is 14:9.

When an image having a 16:9 aspect ratio is transmitted, it can be used in conjunction with side panels or some other "widening" method.

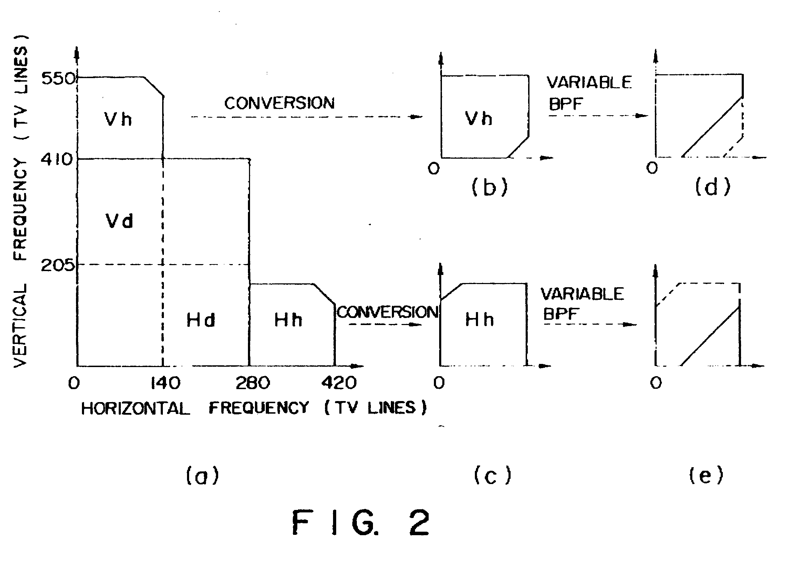

FIG. 2 is a view describing the principle of the image high-frequency component multiplex transmission apparatus and receiving apparatus of the present invention, and shows the two-dimensional frequencies of the image.

The horizontal axis is the horizontal frequency and the vertical axis is the vertical frequency, with the units being TV lines in each case.

The spatial frequencies that can be transmitted by the NTSC system, for example, are essentially 480 TV lines vertically, and 330 TV lines horizontally. But, the effective screen becomes narrower because of the top and bottom masks that take approximately 14%, and the frequencies that can be transmitted without multiplexing is 410TV lines vertically, and 280TV lines horizontally, as shown in FIG. 2(a).

However, still using the conventional example, when there is a 25% mask, this becomes 360TV lines vertically and 240TV lines horizontally.

The extended vertical high-frequency component that is multiplexed is shown by Vh in the figure, and the vertical axis is the region from 410 to 550, and the horizontal axis is the region from 0 to 140.

In the same manner, the extended horizontal high-frequency component that is multiplexed is shown in the figure as Hh and the horizontal axis changes from 280 to 420 and the vertical axis changes from 0 to 140.

However, when the input is NTSC signals, there are only 480TV lines in the vertical direction and so higher frequency bands than this are not used, but when there is the input of HDTV ("HiVision") signals that have a band which is wider than NTSC signals, it is possible to use this high-frequency band more effectively.

As shown in FIG. 2(b), Vh has the high and low of the frequency inverted in the vertical direction and two-dimensionally converted into the low region.

In the same manner, as shown in FIG. 2(c), Hh has high and low frequencies inverted in the horizontal direction, and is two-dimensionally converted into the low region.

When there are respective band restrictions on the high-frequency components, the basic transmission region and the band are connected.

The Vh region and the Hh region respectively have their bands controlled by variable band pass filters (BPF), they become as shown in FIG. 2(d) and (e) respectively.

Thus, the vertical high-frequency component shown in FIG. 2(d) and the horizontal high-frequency component shown in FIG. 2(e) are added.

Band control restricts the band so that one becomes the opposite of the other, so that both do not become overlapped after the vertical and the horizontal have been added.

This means that Vh and Hh do not overlap even after they have been added.

The added band is 140TV lines for both the vertical and the horizontal and there are 70 lines of the mask portion that is used in the transmission and so dividing the 140 vertical lines into two gives 70 lines.

This, for example, can use resampling or some other method to compress two lines into one in the horizontal direction.

By this, there become 280TV lines of the horizontal band and the 70 vertical lines and these are overlapped to the mask portion.

Restricting the band is performed so as to correspond to the amounts of the vertical and the horizontal high-frequency components and so is called adaptive processing, and is performed by the frequency distribution of the basic frequency component.

More specifically, the region used for the control of the adaptive processing is inside the region that is transmitted as the basic frequency component and for the vertical, is the region shown by Vd in FIG. 2(a) for where the vertical axis is from 205 to 410, and where the horizontal axis is from 0 to 140, and for the horizontal, is the region shown by Hd in the figure for where the horizontal axis is from 140 to 280, and where the vertical axis is from 0 to 205.

This region can be changed if applied by the receive side, and causes no problems.

Vh and Vd, and Hh and Hd are different frequency regions but are respectively adjacent so there is a strong correlation for the generation of those frequency components.

For example, in the edge in the longitudinal direction (horizontal lines), there is a frequency component generated for both Vh and Vd.

The amounts of the high-frequency components of the two frequency regions of Vd and Hd are calculated and this ratio determines the ratio of Vh and Hh.

In the portion where there is much Vd with respect to Hd, Vh becomes wider and Hh becomes narrower.

In the opposite portion, Hh becomes wider and Vh becomes narrower.

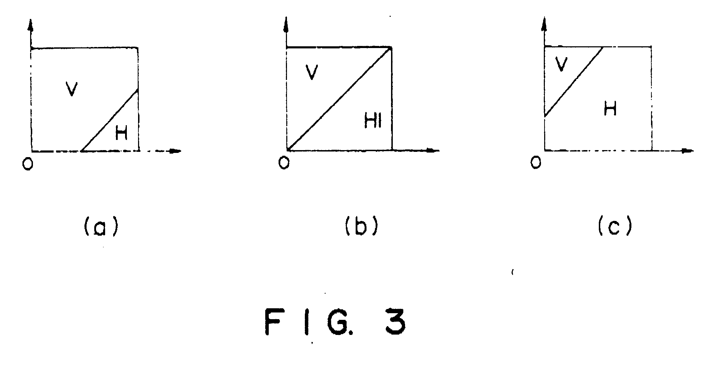

FIG. 3 is a view of adaptive processing for the band.

FIG. 3 (a) shows the case where there is a greater vertical component, while FIG. 3 (b) shows the case where both components exist to the same degree, while FIG. 3 (c) shows the case where there is a greater horizontal component.

In this manner, control judgment is performed by the basic frequency component region and so there is the possibility that band restriction for which Vh and Hh signals cannot be detected but the same adaptive processing can be performed on the send side and the receive side and there is no misoperation such as mistaking the vertical and the horizontal.

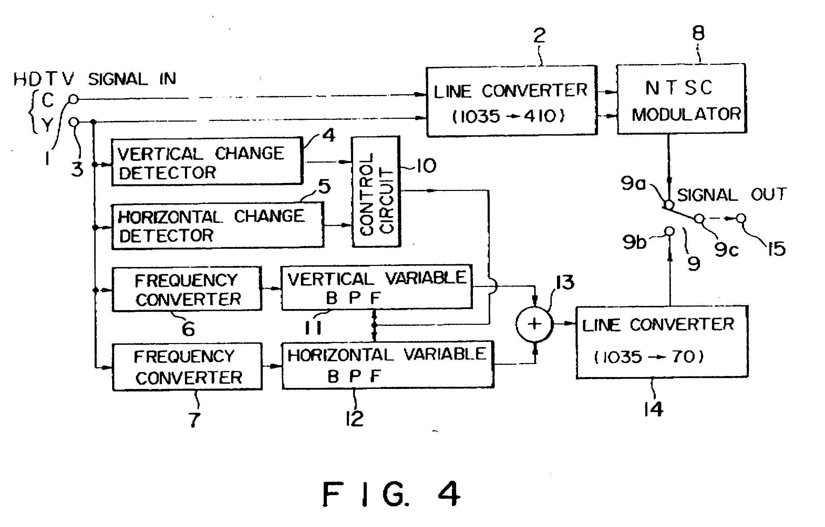

FIG. 4 is a block view of an embodiment of the image high-frequency component multiplex transmission apparatus (encoder) of the present invention.

In the transmission apparatus, the portion other than the portions of the vertical high-frequency component and the horizontal high-frequency component that have been adaptive processed, is the same as that for a conventional transmission apparatus and so its description is omitted here.

The signals that are input to the transmission apparatus are HDTV ("HiVision") signals that have a band wider than NTSC system signals and are input by separation into C signals and Y signals.

The C signals input from the C signal input terminal 1 are supplied to a line converter 2.

On the other hand, the Y signals that are input from the Y signal input terminal 3 are supplied to a line converter 2, a vertical change detector 4, a horizontal change detector 5 and frequency converters 6 and 7.

The line converter 2 performs conversion of the Y signals and the C signals from 1035 lines to 410 lines when there is a band restriction to 410TV lines as the basic image.

The output signals of the line converter 2 are input to the NTSC modulator 8 and become the NTSC signals of the basic portion shown in FIG. 1 that does not have the top and bottom 70 lines.

The NTSC signals that are the output signals of the NTSC modulator 8 are supplied to the terminal 9a of the switching switch 9.

The following is a description of the band control stage.

The vertical change detector 4 is configured from an two-dimensional band pass filter that passes the Vd band of FIG. 2, and an absolute value circuit, and detects the vertical high-frequency component.

In the same manner, the horizontal change detector 5 is configured from a two-dimensional band pass filter that allows the Hd band shown in FIG. 2 to pass, and an absolute value circuit, and detects the horizontal high-frequency component.

The output signals of the vertical change detector 4 and the horizontal change detector 5 are supplied to the control circuit 10.

The control circuit 10 is configured from a table ROM (read only memory) to which the control characteristics described above, that is, in the portion where there is much Vd with respect to Hd, Vh becomes wider and Hh becomes narrower have been written beforehand, and takes a suitable control value corresponding to the two input values, and outputs it as a control signal.

On the other hand, as shown in FIG. 2 (b), the frequency converter 6 inverts Vh high and low in the vertical direction and performs two-dimensional conversion to the low region.

In the same manner, as shown in FIG. 2 (c), the frequency converter 7 inverts Hh high and low in the horizontal direction and performs two-dimensional conversion to the low region.

The frequency converter 6 and 7 are respectively realized by means of local oscillation signals of 550TV lines vertically and OTV lines horizontally and 420TV lines horizontally and OTV vertically and a two-dimensional LPF (low pass filter) of 140TV lines horizontally and vertically.

The output signals of the frequency converter 6 are supplied to the vertical variable BPF 11.

In the same manner, the output signals of the frequency converter 7 are supplied to the horizontal variable BPF 12.

The vertical variable BPF 11 and the horizontal variable BPF 12 variably control the pass bands of the Vh and Hh as shown in FIG. 2 (d) and (e), using control signals supplied from the control circuit 10.

Varying the pass band is performed by changing the tap coefficient of the filter.

The output signals of the vertical variable BPF 11 and the horizontal variable BPF 12 are respectively supplied to the adder 13 and are added.

The output signals of the adder 13 are supplied to the line converter 14 and are divided into two vertically, and converted from 1035 lines into 70 lines.

The output signals of the line converter 14 are supplied to the terminal 9b of the switching switch 9.

The switching switch 9 is controlled by the vertical position of the screen and as shown in FIG. 1, the additional high-frequency component (high-frequency signals) that are the output signals of the line converter 14 and which are supplied from the terminal 9b are selected in the top 35 and the bottom 35 lines.

On the other hand, the basic component (basic signals) that are the output signals of the NTSC modulator 8 and which are supplied from the terminal 9a are selected in the 410 lines of the central portion other than this.

The signals that are selected by the switching switch 9 are output from the transmission signal output terminal 15 via the terminal 9c, as EDTV (extended definition television) signals that are compatible with NTSC.

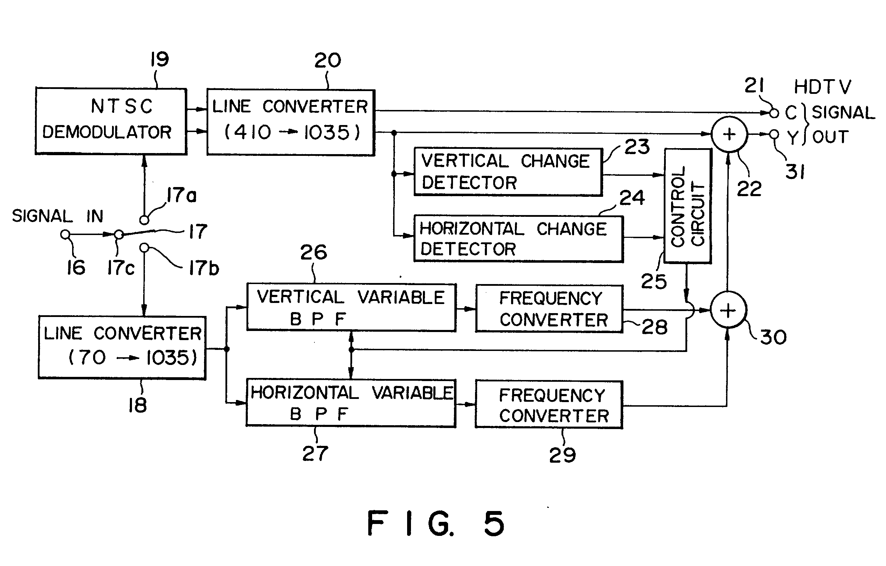

FIG. 5 is a block view of an embodiment of the image high-frequency component multiplex receiving apparatus (decoder) of the present invention.

The processing on the receive side is basically the reverse of that on the transmission side.

The output signals (image display) of FIG. 5 are HDTV signals that are the same as the input signals of the encoder shown in FIG. 4 but the transmitted band can have any number of lines if it is within the range that can be reproduced.

The EDTV signals that are input from the transmission signal input terminal 16 are supplied to the terminal 17c of the switching switch 17 that is controlled by the vertical position of the image.

The terminal 17c of the switching switch 17 is connected to the line number converter 18 via the terminal 17b during the top 35 line and the bottom 35 line period, and the additional high-frequency component is supplied.

Then, during the 410 line period of the central portion, there is connection to the NTSC demodulator 19 via the terminal 17a and the basic frequency component is supplied.

The NTSC demodulator 19 demodulates the Y signals and the C signals from the NTSC signals that are the basic frequency component and supplies them to the line converter 20.

The line converter 20 performs line interpolation for both the Y signals and the C signals, and converts them from 410 lines to 1035 lines, and the C signals are output as they are via the C signal output terminal 21, while the Y signals are supplied to the adder 22, the vertical change detector 23 and the horizontal change detector 24.

The following is a description of the band control stage.

The vertical change detector 23 is configured from a two dimensional band pass filter that allows the Vd signals of FIG. 2 to pass, and an absolute value circuit, and detects the vertical component.

In the same manner, the horizontal change detector 24 is configured from a two dimensional band pass filter that allows the Hd signals of FIG. 2 to pass, and an absolute value circuit, and detects the horizontal component.

The output signals of the vertical change detector 23 and the horizontal change detector 24 are supplied to the control circuit 25.

The control circuit 25 is configured from a table ROM (read only memory) to which the control characteristics described above, that is, in the portion where there is much Vd with respect to Hd, Vh becomes wider and Hh becomes narrower have been previously written, and takes the suitable control value corresponding to the two inputs, and outputs it as control signals.

Also, the line number converter 18 returns the additional high-frequency component that has been supplied form the switch 17, that which has been divided into two vertically, into its original state and converts the number of lines from 70 to 1035.

The output signals of the line number converter 18 are supplied to the vertical variable band pass filter 26 and the horizontal variable band pass filter 27.

As shown in FIG. 2 (d) and (e), the vertical variable band pass filter 26 and the horizontal variable band pass filter 27 perform varying control of the pass band of the Vh and Hh by control signals that are supplied from the control circuit 25.

Varying the pass band is performed by changing the tap coefficient of the filter.

The output signals of the vertical variable band pass filter 26 are supplied to the frequency converter 28.

In the same manner, the output signals of the horizontal variable band pass filter 27 are supplied to the frequency converter 29.

The frequency converter 28 inverts the high and low of the Vh frequency in the vertical direction, and converts it two-dimensionally in the high region so that it is opposite that of FIG. 2.

In the same manner, the frequency converter 29 inverts the high and low of the Hh frequency in the horizontal direction, and converts it two-dimensionally in the high region so that it is opposite that of FIG. 2.

The output signals of the frequency converter 28 and the frequency converter 29 are respectively supplied to the adder 30, and are added to obtain the additional high-frequency component.

The additional high-frequency component that is the output signal of the adder 30 is suppled to the adder 22.

The adder 22 adds the basic frequency component that is supplied from the line converter 20 and the additional high-frequency component that is supplied from the adder 30, to obtain the Y signals for HDTV, and outputs the component via the Y signal output terminal 31.

Also, the description for the present embodiment was given in terms of the top and bottom mask method but it is of course possible to apply the present invention to high-frequency transmission and the like that utilize spatial-temporal hole portions.

In this case, the high-frequency component is transmitted by the spatial-temporal hole portions of the color subcarrier instead of by the mask portion, but there is no change in the configuration of the adaptive processing portion and the processing method. The encoder does not use the line converter 2 and 14 of FIG. 4, and instead of the line converter 14, uses a modulator for the spatial-temporal hole portions of the color subcarrier.

The decoder is the same in that it does not have the line converter 18 and 20 of FIG. 5, and instead of the line converter 18 requires a demodulator for the spatial-temporal hole portions.

According to the present invention, when an image high-frequency component is used to perform multiplex transmission, the band of the vertical high-frequency component and the band of the horizontal high-frequency component are adaptively changed by the frequency distribution of the image so that it is possible to perform effectively wider frequency band transmission.

Accordingly, there is an improvement in the resolution in EDTV and the like.

While the presently preferred embodiments of the present invention have been shown and described, it is to be understood this disclosures are for the purpose of illustration and that various changes and modifications may be made without departing from the scope of the invention as set forth in the appended claims.

## Claims

1. A multiplex apparatus which multiplexes a signal derived from extended horizontal and vertical high-frequency components with a basic video signal, the extended horizontal and vertical high-frequency components having spatial frequencies higher than those of the basic video signal, the basic video signal and the extended horizontal and vertical high-frequency components having been derived from a video signal corresponding to an image, said multiplex apparatus comprising:
band conversion means (6,7) for converting the spatial frequency bands of the extended horizontal and vertical high-frequency components to that of the basic video signal, respectively;
band width change means (11,12) for changing the spatial frequency band widths of the extended horizontal and vertical high-frequency components with their spatial frequency bands converted, respectively;
addition means (13) for adding the extended horizontal and vertical high-frequency components with their spatial frequency band widths changed; and
multiplex means (9) for multiplexing the result of the addition with the basic video signal;
characterised by further comprising:
control means (10) for generating a control signal corresponding to the image;
and in that the control signal controls the band width change means (11,12) such that the spatial frequency band widths of the extended horizontal and vertical high-frequency components with their spatial frequency bands converted are changed such that each becomes the complement of the other whereby these two components do not overlap each other on being added together.

2. The apparatus according to Claim 1, wherein the control means (10) compares horizontal and vertical spatial frequency components of the basic video signal to generate the control signal.

3. A receiving apparatus for receiving an input video signal generated by the multiplex apparatus of Claim 1 the apparatus comprising:
signal separation means (17) for separating the input video signal into the basic video signal and the extended high-frequency components having their spatial frequency bands changed and converted into that of the basic video signal;
band width change means (26,27) for changing the spatial frequency band widths of the extended high-frequency components separated from the input video signal, whereby to separate the horizontal and vertical high-frequency components respectively;
band conversion means (28,29) for re-converting the spatial frequency bands, converted into that of the basic video signal, of the extended horizontal and vertical high-frequency components, with their spatial frequency band width changed, to their original spatial frequency bands, respectively; and
addition means (22) for adding to the basic video signal the extended horizontal and vertical high-frequency components having the spatial frequency band re-converted;
the receiving apparatus being characterised by further comprising control means (25) for generating a control signal corresponding to the image; and
in that the control signal controls the band width change means (26,27) such that the band width of the extended high-frequency components is changed so as to produce the extended horizontal high-frequency component and the extended vertical high-frequency component at their original spatial band width, respectively.

4. The apparatus according to Claim 3, wherein the control means (25) compares horizontal and vertical spatial frequency components of the basic video signal to generate the control signal.

## Revendications

1. Dispositif de multiplex qui multiplexe un signal déterminé à partir de composantes de haute fréquence étendues horizontale et verticale avec un signal vidéo de base, les composantes de haute fréquence étendues horizontale et verticale ayant des fréquences spatiales supérieures à celles du signal vidéo de base, le signal vidéo de base et les composantes de haute fréquence étendues horizontale et verticale ayant été déterminées à partir d'un signal vidéo correspondant à une image, ledit dispositif de multiplex comprenant :
des moyens de conversion de bande (6, 7) pour convertir les bandes de fréquences spatiales des composantes de haute fréquence étendues horizontale et verticale, respectivement en celles du signal vidéo de base ;
des moyens de modification de largeur de bande (11, 12) pour modifier les largeurs de bandes de fréquences spatiales des composantes de haute fréquence étendues horizontale et verticale, respectivement avec leurs bandes de fréquences spatiales converties ;
des moyens d'addition (13) pour additionner les composantes de haute fréquence étendues horizontale et verticale avec leurs largeurs de bandes de fréquences spatiales modifiées ; et
des moyens de multiplex (9) pour multiplexer le résultat de l'addition avec le signal vidéo de base ;
caractérisé en ce qu'il comprend en outre :
des moyens de commande (10) pour générer un signal de commande correspondant à l'image ;
et en ce que le signal de commande commande les moyens de variation de largeur de bande (11, 12) de façon que les largeurs de bandes de fréquences spatiales des composantes de haute fréquence étendues horizontale et verticale avec leurs bandes de fréquences spatiales converties soient modifiées de sorte que chacune devient le complément de l'autre afin que ces deux composantes ne se superposent pas l'une à l'autre lorsqu'elles sont ajoutées ensemble.

2. Dispositif selon la revendication 1, dans lequel les moyens de commande (10) comparent les composantes de fréquences spatiales horizontale et verticale du signal vidéo de base pour générer le signal de commande.

3. Dispositif de réception destiné à recevoir un signal vidéo d'entrée généré par le dispositif de multiplex de la revendication 1, le dispositif comprenant :
des moyens de séparation de signal (17) pour séparer le signal vidéo d'entrée en le signal vidéo de base et les composantes de haute fréquence étendues ayant leurs bandes de fréquences spatiales modifiées et converties en celle du signal vidéo de base ;
des moyens de variation de largeur de bande (26, 27) pour modifier les largeurs de bande de fréquences spatiales des composantes de haute fréquence étendues séparées du signal vidéo d'entrée, de façon à séparer respectivement les composantes de haute fréquence horizontale et verticale ;
des moyens de conversion de bande (28, 29) pour reconvertir les bandes de fréquences spatiales, converties en celles du signal vidéo de base, des composantes de haute fréquence étendues horizontale et verticale, avec leurs largeurs de bande de fréquences spatiales modifiées, respectivement en leurs bandes de fréquences spatiales d'origine ; et
des moyens d'addition (22) pour additionner au signal vidéo de base les composantes de haute fréquence étendues horizontale et verticale ayant la bande de fréquences spatiales reconvertie ;
le dispositif de réception étant caractérisé en ce qu'il comprend en outre des moyens de commande (25) pour générer un signal de commande correspondant à l'image ; et
en ce que le signal de commande commande les moyens de variation de largeur de bande (26, 27) de façon que la largeur de bande des composantes de haute fréquence étendues soit modifiée pour produire la composante de haute fréquence horizontale étendue et la composante de haute fréquence verticale étendue, respectivement avec leurs largeurs de bande spatiales d'origine.

4. Dispositif selon la revendication 3, dans lequel les moyens de commande (25) comparent les composantes de fréquences spatiales horizontale et verticale du signal vidéo de base pour générer le signal de commande.

## Patentansprüche

1. Ein Multiplexgerät, das Signale multiplext, die von erweiterten horizontalen und vertikalen Hochfrequenz-Bildkomponenten mit einem Basisvideosignal abgeleitet werden, wobei die erweiterten horizontalen und vertikalen Hochfrequenz-Bildkomponenten räumliche Frequenzen aufweisen, die höher sind als jene des Basisvideosignals, und das Basisvideosignal und die erweiterten horizontalen und vertikalen Hochfrequenz-Bildkomponenten von einem Videosignal abgeleitet worden sind, das einem Bild entspricht, wobei das Multiplexgerät aufweist:
Bandumwandlungseinrichtungen (6,7) zur Umwandlung der räumlichen Frequenzbänder der erweiterten horizontalen bzw. vertikalen Hochfrequenz-Bildkomponenten in jene des Basisvideosignals;
Bandbreitenänderungseinrichtungen (11,12) zur Änderung der Bandbreiten der räumlichen Frequenz der erweiterten horizontalen bzw. vertikalen Hochfrequenz-Bildkomponenten mit deren konvertierten räumlichen Frequenzbändern;
eine Additionseinrichtung (13) zur Addition der erweiterten horizontalen und vertikalen Hochfrequenz-Bildkomponenten mit deren veränderten Bandbreiten der räumlichen Frequenz; und
eine Multiplexeinrichtung (9) zum Multiplexen des Ergebnisses der Addition mit dem Basisvideosignal; das
**dadurch gekennzeichnet**
ist, daß es weiterhin aufweist:
eine Steuereinrichtung (10) zur Erzeugung eines dem Bild entsprechenden Steuersignals;
und dadurch, daß das Steuersignal die Bandbreitenänderungseinrichtungen (11,12) so steuert, daß die Bandbreiten der räumlichen Frequenz der erweiterten horizontalen und vertikalen Hochfrequenz-Bildkomponenten mit ihren konvertierten räumlichen Frequenzbändern so verändert werden, daß jede das Komplement der anderen wird, wobei diese beiden Komponenten einander nicht überlappen, wenn sie addiert werden.

2. Das Gerät nach Anspruch 1, wobei die Steuereinrichtung (10) die horizontalen und vertikalen räumlichen Frequenz-Bildkomponenten des Basisvideosignals vergleicht, um das Steuersignal zu erzeugen.

3. Ein Empfangsgerät für den Empfang eines Eingangsvideosignals, das von dem Multiplexgerät aus Anspruch 1 erzeugt wurde, wobei das Gerät aufweist:
Signaltrenneinrichtungen (17) zur Trennung des Eingangsvideosignals in das Basisvideosignal und die erweiterten Hochfrequenz-Bildkomponenten, deren räumliche Frequenzbänder verändert und in jene des Basisvideosignals konvertiert sind;
Bandbreitenänderungseinrichtungen (26,27) zur Änderung der von dem Eingangssignal abgetrennten Bandbreiten der räumlichen Frequenz der erweiterten Hochfrequenz-Bildkomponenten, wobei die horizontalen bzw. vertikalen Hochfrequenz-Bildkomponenten getrennt werden;
Bandumwandlungseinrichtungen (28,29) zur Rückwandlung der räumlichen Frequenzbänder der erweiterten horizontalen und vertikalen Hochfrequenz-Bildkomponenten, die in jene des Basisvideosignals umgewandelt wurden, wobei deren räumliche Frequenzbandbreite verändert wurde, in deren jeweilige ursprüngliche räumliche Frequenzbänder; und
eine Additionseinrichtung (22) zur Addition der erweiterten horizontalen und vertikalen Hochfrequenz-Bildkomponenten, deren räumliches Frequenzband zurückgewandelt wurde;
wobei das Empfangsgerät
**dadurch gekennzeichnet**
ist, daß es weiterhin eine Steuereinrichtung (25) zur Erzeugung eines dem Bild entsprechenden Steuersignals aufweist;
und dadurch, daß das Steuersignal die Bandbreitenänderungseinrichtungen (26,27) so steuert, daß die Bandbreite der erweiterten Hochfrequenz-Bildkomponenten so geändert wird, daß sich die erweiterte horizontale Hochfrequenz-Bildkomponente bzw. die erweiterte vertikale Hochfrequenz-Bildkomponente mit deren jeweiliger ursprünglicher räumlicher Bandbreite ergeben.

4. Das Gerät nach Anspruch 3, wobei die Steuereinrichtung (25) die horizontalen und vertikalen räumlichen Frequenz-Bildkomponenten des Basisvideosignals vergleicht, um das Steuersignal zu erzeugen.
